## Europäisches Patentamt
## European Patent Office
## Office européen des brevets

(11) Publication number: **0 099 682**
**B1**

(12) **EUROPEAN PATENT SPECIFICATION**

(45) Date of publication of patent specification: **10.06.87**

(51) Int. Cl.⁴: $C\ 09\ D\ 11/00$

(21) Application number: **83303839.1**

(22) Date of filing: **01.07.83**

(54) Ink jet ink composition.

(30) Priority: **01.07.82 US 394153**

(43) Date of publication of application:
**01.02.84 Bulletin 84/05**

(45) Publication of the grant of the patent:
**10.06.87 Bulletin 87/24**

(84) Designated Contracting States:
**CH DE FR GB IT LI**

(56) References cited:
**FR-A- 382 197**
**GB-A- 601 513**
**GB-A-2 089 827**
**US-A-2 584 318**
**US-A-3 653 932**

(73) Proprietor: **Exxon Research and Engineering Company**
**P.O.Box 390 180 Park Avenue**
**Florham Park New Jersey 07932 (US)**

(72) Inventor: **Lin, An-Chung Robert**
**1 Patricia Lane**
**New Town Connecticut (US)**
Inventor: **Whitfield, Richard George**
**19 Old Turnpike Road**
**Brookfield Connecticut (US)**
Inventor: **Cooke, Theodore Michael**
**25 Washington Avenue**
**Danbury Connecticut (US)**

(74) Representative: **Pitkin, Robert Wilfred et al**
**ESSO Engineering (Europe) Ltd.**
**Patents & Licences**
**Apex Tower**
**High Street**
**New Malden Surrey KT3 4DJ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## 0 099 682

**Description**

Ink Jet Ink Composition

This invention relates to an ink jet ink composition suitable for discharging from an ink jet apparatus at a temperature above ambient temperature, which is normally a temperature of from 20°C to 25°C. Known ink jet inks often provide marginal print quality. This is because water-based jet inks are generally incompatible with paper, having poor penetration and drying characteristics with respect to the paper. On the other hand, oil-based inks which are more compatible with paper, have low surface tensions and usually provide ink dots which are too large to give good print quality.

It is an object of the present invention to provide an improved ink jet ink.

According to the present invention there is provided a non-aqueous ink jet ink composition which is suitable for being discharged from an ink jet apparatus at a temperature above ambient temperature; characterised by containing stearic acid in a weight percentage range of from 50.0 to 99.0 and at least one dye or colouring agent soluble in the composition, said composition having a maximum viscosity of $35 \times 10^{-3}$ Pa.s. at a temperature in the range of 40°C to 90°C.

Stearic acid of commercial quality may be considered a wax or mixture of waxes, synthetic or natural, and is normally a mixture of fatty acids in which stearic acid predominates.

Commercial stearic acids are chiefly produced from saponified and distilled animal fatty acids. These fatty acids are usually composed of approximately 60% liquid and 40% solid acid. The bulk of the liquid acids is separated from the solid acids by hydraulic pressing. From the first pressing single-pressed stearic acid is obtained, from the second pressing, double-pressed stearic acids, and from the third pressing, triple pressed stearic acids. Each successive pressing removes additional liquid fatty acids, thus increasing the purity and quality of the resulting solid stearic acid. The liquid acids present are unsaturated and the solid acids, saturated.

In addition to the stearic acids useable in the invention there may be employed compounded or chemically modified waxes, which may include natural or synthetic materials, for example, resins.

A definition of "waxes" can be found in *Industrial Waxes* by H. Bennett; Volumes 1 and 2; Chemical Publishing Company, Inc., New York, NY (1975). Bennett defines a wax as "an unctuous solid with varying degrees of gloss, slipperiness and plasticity, which melts readily."

Natural waxes may be of vegetable, animal or mineral origin. Modified waxes are natural waxes that have been treated chemically to change their nature and properties. Synthetic waxes are made by the reaction of polymerization of chemicals. Compounded waxes are mixtures of various waxes or of waxes with resins or other compounds added thereto. The term "Wax-Natural" is also described on page 1094 of the 10th Edition of the Condensed Chemical Dictionary, Van Nostrand Reinhold Company, New York. The term "Wax-Synthetic" is also described on page 1094 of the above-referred to Dictionary. The term "Natural Wax" as used herein will include Japan wax, candelilla wax and carnauba wax. It does not include materials such as kauri gum, wool wax or cocoa butter.

Wax-containing ink jets inks are usually solids or semi-solids at ambient temperature, and therefore, require to be discharged from an ink jet apparatus at elevated temperatures. The heated ink fluid will solidify when it comes in contact with its paper target. The rate of solidification of the wax-containing ink will control the degree of penetration into the paper, usually a small circular dot will result. As a general rule, inks containing wax as a major component thereof, will have less penetration into the paper than inks containing additive amounts of wax.

A hot-melt ink for use in an ink jet apparatus is taught in United States Patents, Nos. 3,653,932 and 3,715,219, respectively. The major component of the hot melt ink is a didodecyl-sebacate which is a highly viscous, synthetic substance. As compared with the present invention, the didodecyl-sebacate is a synthetic substance which is generally too viscous to provide good jetability in an impulse ink jet apparatus.

In a Japanese Abstract, Rico J56166—274, the use of stearic acid in an oil-in-water emulsion ink fluid is suggested. This aqueous ink uses only small amounts of fatty acids in its formulations, and is not meant to operate as a hot melt (wax) ink.

In the field of pressure indicia transfer sheeting, US—A—3 282 709 discloses transfer compositions, more particularly carbon paper compositions suitable for pressure operative duplicating media. To eliminate the problems of "ghosting" or "offsetting" with known carbon papers it is proposed to employ transfer compositions essentially containing fatty acids, metallic soaps and carbon black. The transfer compositions contain 50 to 90 wt% of the fatty acids; 73 wt% of stearic acid being specifically disclosed.

The ink composition of the present invention suitably further contains oleic acid. The stearic acid may be the basic fluid vehicle of the ink or may be used as an additive to other fluidic vehicles such as fatty acids, and more particularly oleic acid, and oleic acid with benzyl ether, etc.

At least one dye or coloring agent soluble in the ink composition is also present for enhanced visibility. Examples are Typophor Black and Calco Nigrosine Base, manufactured respectively by BASF and American Cyanamid.

The ink jet ink composition of this invention has a maximum viscosity of $35 \times 10^{-3}$ Pa.s (35 centipoises) at a temperature in the range 40°C to 90°C.

Stearic acid as an ink jet ink vehicle has been found to have the advantage of good dye solubility,

2

viscosity vs. temperature relationship and good compatibility to a wide range of vehicles. The stearic acid also has a functional group, COOH, which has good affinity to paper. Thus, it will prevent the ink flaking off from the paper. The stearic acid can be used in a hot melt ink. Because the ink changes from liquid to solid when it hits the paper, the ink/paper interaction has been minimized. The dots are very consistent so that it gives good print quality on almost any kind of paper.

An ink composition according to this invention gives a good print quality. Print quality is generally a measure of the circularity of an ink dot. An ink of this invention provides highly repetitive dots of small size and high measure of circularity thus giving good edge definition and contrast. Circularities of 0.7 or better are attainable, as measured by the technique described in our European Patent Publication EP—A—62444.

Essentially that technique involves the following steps. Firstly circularity is determined by first examining a printer ink dot under a microscope. An overlap is then placed over the dot, which overlay comprises a number of concentric circles. Two of these circles are then selected. The first is a circle which will just completely encircle the dot. The diameter "$D_1$" of that circle is then determined. The second is the largest circle which will enclose the area of highest optical density inside the overall circumference of the dot. The diameter "$D_0$" of that circle is then determined.

The sharpness, or dot circularity, "T" of the dot is defined as the ratio of the diameters: $D_0/D_1$.

The above procedure is repeated for several dots and an average dot circularity is determined. This average dot circularity is a good indication of the edge definition or print quality of an ink jet character or letter.

The ink formulations of this invention find particular applicability in an ink jet apparatus of the impulse type, but are not limited thereto.

Specific ink formulations which have been found to provide the above described good ink dot circularity are presented in Table I below by way of non-limitative examples. The composition of each ink is given as weight percent.

TABLE I

| | | | | | | |
|---|---|---|---|---|---|---|
| Stearic Acid | 85 | 97 | 60 | 60 | 65 | 75 |
| Oleic Acid | — | — | 20 | 20 | — | — |
| Typophor Black | 15 | — | 20 | 20 | 15 | — |
| Calco Nigrosine Base | — | 3 | — | — | — | 5 |
| Wax No. 2** | — | — | — | — | 20 | — |
| Wax No. 3** | — | — | — | — | — | 20 |
| Viscosity (Pa.s $\times 10^{-3}$) @ 65°C | — | — | — | — | 18.4 | 9.0 |
| @ 70°C | — | 1.4 | — | — | — | 7.7 |
| @ 75°C | 11.4 | — | 10.5 | 10.1 | 13.4 | — |
| @ 85°C | — | — | — | — | 10.2 | — |
| Ejection orifice diameter (µm) (mil) | 50.8 (2) | 50.8 (2) | 76.2 (3) | | | |
| Dot size* diameter (µm) (mil) | 101.6 (4) | 101.6 (4) | 152.4 (6) | | | |

* The dot size data is generally independent of target substrate materials (paper) but will vary to a slight degree with different ink jet apparatuses.
** The waxes designated No. 2 and No. 3 are products of Strahl & Pitsch, Inc. 230 Great East Neck Road, West Babylon, N.Y. 11704.

**0 099 682**

The above ink formulations provide dots which produce characters approaching typewriter quality printing. As such, the above formulations are believed to provide inks which result in the finest print quality in the ink jet art.

Other natural waxes such as Japan wax, candelilla wax and/or carnuauba wax can be blended with stearic acid to produce an acceptable ink for an ink jet apparatus.

The above formulations are, however, meant to be only exemplary, and are meant to provide a general teaching and understanding of the invention.

## Claims

1. A non-aqueous ink jet ink composition which is suitable for being discharged from an ink jet apparatus at a temperature above ambient temperature; characterised by containing stearic acid in a weight percentage range of from 50.0 to 99.0 and at least one dye or colouring agent soluble in the composition, said composition having a maximum viscosity of $35 \times 10^{-3}$ Pa.s at a temperature in the range of 40°C to 90°C.

2. An ink jet ink composition as claimed in claim 1, wherein the stearic acid is present in the form of a wax or a mixture of waxes.

3. An ink jet ink composition as claimed in claim 2, wherein the composition comprises a chemically modified or compounded wax.

4. An ink jet ink composition as claimed in claim 1 or claim 2, wherein the composition comprises a natural wax in addition to the stearic acid.

5. An ink jet ink composition as claimed in claim 4, wherein the natural wax is selected from Japan wax, candelilla wax and carnauba wax.

6. An ink jet ink composition as claimed in any preceding claim wherein the composition further contains oleic acid.

7. A method of ink jet printing employing an ink jet printer from which ink is discharged at above ambient temperature, characterised by employing an ink composition defined in any preceding claim.

## Patentansprüche

1. Nicht wässrige Tintenstrahl-Tintenzusammensetzung, die sich für den Ausstoß aus einer Tintenstrahlvorrichtung bei einer Temperatur oberhalb Raumtemperatur eignet, dadurch gekennzeichnet, daß sie Stearinsäure in einem Gewichtsprozentbereich von 50,0 bis 99,0 und mindestens einen Farbstoff oder ein Färbemittel enthält, das in der Zusammensetzung löslich ist, wobei die Zusammensetzung eine maximale Viskosität von $35 \times 10^{-3}$ Pa.s bei einer Temperatur in Bereich von 40 bis 90°C besitzt.

2. Tintenstrahl-Tintenzusammensetzung nach Anspruch 1, dadurch gekennzeichnet, daß die Stearinsäure in Form eines Wachses oder einer Mischung von Wachsen vorhanden ist.

3. Tintenstrahl-Tintenzusammensetzung nach Anspruch 2, dadurch gekennzeichnet, daß die Zusammensetzung eines chemisch modifiziertes oder compoundiertes Wachs umfaßt.

4. Tintenstrahl-Tintenzusammensetzung nach Anspruch 1 oder 2, dadurch gekennzeichnet, daß die Zusammensetzung ein natürliches Wachs zusätzlich zur Stearinsäure umfaßt.

5. Tintenstrahl-Tintenzusammensetzung nach Anspruch 4, dadurch gekennzeichnet, daß das natürliche Wachs ausgewählt ist aus Japanwachs, Candelillawachs und Carnaubawachs.

6. Tintenstrahl-Tintenzusammensetzung nach einem der vorangehenden Ansprüche, dadurch gekennzeichnet, daß die Zusammensetzung zusätzlich Ölsäure enthält.

7. Tintenstrahldruckverfahren unter Verwendung eines Tintenstrahldruckers, aus dem Tinte oberhalb Raumtemperatur abgegeben wird, dadurch gekennzeichnet, daß eine Tintenzusammensetzung gemäß einem der vorangehenden Ansprüche verwendet wird.

## Revendications

1. Composition d'encre non aqueuse pour impression par jets d'encre, qui convient pour être projetée par un appareil d'impression par jets d'encre à une température supérieure à la température ambiante, composition caractérisée en ce qu'elle contient de l'acide stéarique en une gamme du pourcentage pondéral allant de 50,0 à 99,0 et en ce qu'elle contient au moins un colorant ou agent de coloration soluble dans la composition, ladite composition ayant une viscosité d'au maximum $35 \times 10^{-3}$ Pa.s à une température allant de 40°C à 90°C.

2. Composition d'encre pour impression par jets d'encre selon la revendication 1, dans laquelle l'acide stéarique est présent sous forme d'une cire ou d'un mélange de cires.

3. Composition d'encre pour impression par jets d'encre selon la revendication 2, dans laquelle la composition comprend une cire chimiquement modifiée ou mélangée.

4. Composition d'encre pour impression par jets d'encre selon la revendication 1 ou la revendication 2, dans laquelle la composition comprend une cire naturelle en plus de l'acide stéarique.

5. Composition d'encre pour impression par jets d'encre selon la revendication 4, dans laquelle la cire naturelle est choisie parmi la cire du Japon, la cire de candelilla et la cire de carnauba.

4

**0 099 682**

6. Composition d'encre pour impression par jets d'encre selon l'une qualconque des revendications précédentes, dans laquelle la composition contient en outre de l'acide oléique.

7. Procédé d'impression par jets d'encre, utilisant une machine d'impression par jets d'encre qui projette l'encre à une température supérieure à la température ambiante, procédé caractérisé en ce qu'il utilise une composition d'encre telle que définie dans l'une quelconque des revendications précédentes.